# EUROPÄISCHE PATENTANMELDUNG

(11) **EP 4 822 587 A1**
(43) Veröffentlichungstag der Anmeldung: **14.10.2026**
(21) Anmeldenummer: 26167489.9
(22) Anmeldetag: 25.03.2026
(51) Int. Cl.: G06F 40/20, G10L 15/06, G10L 15/22

(54) **VERFAHREN ZUM TESTEN EINES GENERATIVEN SPRACHMODELLS**

(30) Priorität: 11.04.2025 DE 102025114297
(71) Anmelder: Robert Bosch GmbH, 70442 Stuttgart (DE)
(72) Erfinder: Woehrle, Matthias, 74321 Bietigheim-Bissingen (DE); Hecking-Harbusch, Jesko, 71229 Leonberg (DE); Weiss, Martin, 39340 Haldenslebend (DE)

(57) **Zusammenfassung**

Gemäß verschiedenen Ausführungsformen wird ein Verfahren zum Testen eines generativen Sprachmodells (105) beschrieben, aufweisend, für mindestens eine Anfrage an das generative Sprachmodell (105), Erzeugen, für mindestens eine Augmentierung, mindestens einer augmentierten Version der Anfrage mittels der Augmentierung, Einbetten der mindestens einen augmentierten Version der Anfrage und der Anfrage in einen Einbettungsraum mittels eines maschinellen Einbettungsmodells (203), Ermitteln, für die mindestens eine Augmentierung, eines Anfragen-Ähnlichkeitsmaßes zwischen der mindestens einen augmentierten Version der Anfrage und der Anfrage aus einem Maß für die Ähnlichkeit der eingebetteten mindestens einen augmentierten Version der Anfrage zu der eingebetteten Anfrage im Einbettungsraum und Erzeugen von Testdaten für das generative Sprachmodell (105) mittels der mindestens einen Augmentierung und Testen des generativen Sprachmodells (105) mittels der erzeugten Testdaten abhängig von dem Anfragen-Ähnlichkeitsmaß.

## Beschreibung

Die vorliegende Offenbarung bezieht sich auf Verfahren zum Testen eines generativen Sprachmodells.

Generative Sprachmodelle können für verschiedene Zwecke eingesetzt werden, wie beispielsweise der Generierung von Programmcode. Ein typisches Problem bei der Nutzung generativer Sprachmodelle ist jedoch das Auftreten von Halluzinationen, bei denen das Sprachmodelle falsche oder irrelevante Informationen generiert. Im Falle der Erzeugung von Programmcode kann ein generatives Sprachmodell beispielsweise Programmcode erzeugen, der nicht kompilierbar ist oder eine bestimmte Aufgabe, z.B. Steuerung eines Roboters, nicht wie gewünscht erfüllt. Generative Sprachmodelle sollten deshalb vor ihrer Verwendung, insbesondere in einem industriellen Umfeld, getestet werden, idealerweise mit einem Fokus auf den Einsatz, für den sie vorgesehen sind. Hierfür sind effektive Ansätze wünschenswert.

Gemäß verschiedenen Ausführungsformen wird ein Verfahren zum Testen eines generativen Sprachmodells bereitgestellt, aufweisend, für mindestens eine Anfrage an das generative Sprachmodell, Erzeugen, für mindestens eine Augmentierung, mindestens einer augmentierten Version der Anfrage mittels der Augmentierung, Einbetten der mindestens einen augmentierten Version der Anfrage und der Anfrage in einen Einbettungsraum mittels eines maschinellen Einbettungsmodells, Ermitteln, für die mindestens eine Augmentierung, eines Anfragen-Ähnlichkeitsmaßes zwischen der mindestens einen augmentierten Version der Anfrage und der Anfrage aus einem Maß für die Ähnlichkeit der eingebetteten mindestens einen augmentierten Version der Anfrage zu der eingebetteten Anfrage im Einbettungsraum und Erzeugen von Testdaten für das generative Sprachmodell mittels der mindestens einen Augmentierung und Testen des generativen Sprachmodells mittels der erzeugten Testdaten abhängig von dem Anfragen-Ähnlichkeitsmaß.

Das oben beschriebene Verfahren ermöglicht eine effektive Robustheitsbewertung eines generativen (Black-Box)-Sprachmodells durch Fokussierung auf plausible Augmentierungen. Es kann für verschiedene Anfragen und verschiedene Augmentierungen vielfach ausgeführt werden und das Sprachmodell durch Auswahl von Ergebnissen (also Feedback an das Sprachmodell) verbessert werden. Das ermöglicht es, das Sprachmodell so zu verbessern, dass weniger Halluzinationen auftreten.

Im Folgenden werden verschiedene Ausführungsbeispiele angegeben.

Ausführungsbeispiel 1 ist ein Verfahren zum Testen eines generativen Sprachmodells, wie oben beschrieben.

Ausführungsbeispiel 2 ist ein Verfahren nach Ausführungsbeispiel 1, aufweisend Erzeugen mehrerer augmentierter Versionen der Anfrage mittels der mindestens einen Augmentierung, Erzeugen, für jede der mehreren augmentierten Versionen der Anfrage, mindestens einer Einbettung der augmentierten Version der Anfrage in dem Einbettungsraum und Erzeugen einer Einbettung der Anfrage, Ermitteln eines Einbettungs-Ähnlichkeitsmaßes zwischen den erzeugten Einbettungen der augmentierten Versionen der Anfrage zu der Einbettung der Anfrage, und Ermitteln des Anfragen-Ähnlichkeitsmaßes durch Aggregieren, vorzugsweise Mitteln, der Einbettungs-Ähnlichkeitsmaße über die augmentierten Versionen der Anfrage.

Aggregieren, z.B. Mitteln, über mehrere augmentierten Version über dieselbe Anfrage erhöht die Aussagekraft des Anfragen-Ähnlichkeitsmaßes über die Plausibilität der jeweiligen Augmentierung.

Gemäß einer Ausführungsform weist das Verfahren auf: Erzeugen, für jede augmentierte Version der Anfrage, mehrerer Einbettungen der augmentierten Version der Anfrage in dem Einbettungsraum mittels des Einbettungsmodells, Ermitteln, für jede Einbettung einer augmentierten Version der Anfrage eines Einbettungs-Ähnlichkeitsmaße als Maß für die Ähnlichkeit der eingebetteten augmentierten Version der Anfrage zu der eingebetteten Anfrage im Einbettungsraum und Ermitteln des Anfragen-Ähnlichkeitsmaßes durch Mitteln der Einbettungs-Ähnlichkeitsmaße über die Einbettungen der augmentierten Version der Anfrage.

Mitteln der Maße für die Ähnlichkeit der eingebetteten mindestens einen augmentierten Version der Anfrage zu der eingebetteten Anfrage im Einbettungsraum (d.h. der Einbettungs-Ähnlichkeitsmaße) über die Einbettungen erhöht weiter die Aussagekraft des Anfragen-Ähnlichkeitsmaßes über die Plausibilität der Augmentierung. Die verschiedenen Einbettungen zu derselben augmentierten Version können beispielsweise unter Verwendung mehrere Seeds für das Einbettungsmodell erzeugt werden.

Ausführungsbeispiel 3 ist ein Verfahren nach der Ausführungsbeispiel 1 oder 2, aufweisend Erzeugen von Testdaten für das generative Sprachmodell mittels der mindestens einen Augmentierung und Testen des generativen Sprachmodells mittels der erzeugten Testdaten in Reaktion darauf, dass das Anfragen-Ähnlichkeitsmaß eine vorgegebene Schwelle überschreitet.

Dies fokussiert das Testen auf Augmentierungen mit einer bestimmten Mindest-Plausibilität.

Ausführungsbeispiel 4 ist ein Verfahren nach einem der Ausführungsbeispiele 1 bis 3, aufweisend Erzeugen, für jede mehrerer Augmentierungen, mindestens einer augmentierten Version der Anfrage mittels der Augmentierung;
Einbetten der mindestens einen augmentierten Version der Anfrage und der Anfrage in einen Einbettungsraum mittels des maschinellen Einbettungsmodells; Ermitteln, für die Augmentierung, eines Anfragen-Ähnlichkeitsmaßes zwischen der mindestens einen augmentierten Version der Anfrage und der Anfrage aus einem Maß für die Ähnlichkeit der eingebetteten mindestens einen augmentierten Version der Anfrage zu der eingebetteten Anfrage im Einbettungsraum; Auswählen, aus den mehreren Augmentierungen, einer oder mehrerer Augmentierungen, für die die höchsten Anfragen-Ähnlichkeitsmaßen ermittelt wurden, und Erzeugen von Testdaten für das generative Sprachmodell mittels der mindestens einen ausgewählten Augmentierung und Testen des generativen Sprachmodells mittels der erzeugten Testdaten.

Somit wird das generative Sprachmodell mittels Testdaten getestet, die durch ein oder mehrere Augmentierungen hervorgehen, die die höchste Plausibilität haben.

Ausführungsbeispiel 5 ist ein Verfahren nach einem der Ausführungsbeispiele 1 bis 4, ferner aufweisend Erzeugen von Testdaten für das generative Sprachmodell mittels der mindestens einen Augmentierung und Nachtrainieren des generativen Sprachmodells mittels der erzeugten Testdaten abhängig von dem Anfragen-Ähnlichkeitsmaß und abhängig von einem Ergebnis des Testens des generativen Sprachmodells mit den Testdaten.

Eine oder mehrere ausgewählte Augmentierungen werden also auch zum Trainieren verwendet, falls das Testen ergibt, dass ein weiteres Training erforderlich ist. Dies kann auch im Rahmen eines Reinforcement Learning geschehen, z.B. durch Nutzung der Güte des von dem generativen Sprachmodell in Reaktion auf eine augmentiere Version (gemäß einer ausgewählten Augmentierung) gelieferten Ergebnisses als Reward. Das Verfahren kann also als Teil eines Trainingsverfahrens für ein generatives Sprachmodell verwendet werden.

Gemäß einer Ausführungsform ist das Einbettungsmodell ein Einbettungsmodell oder ein Teil eines Einbettungsmodells, das das generative Sprachmodell für ihm zugeführte Anfragen verwendet.

Damit ist sichergestellt, dass Anfragen, die laut Einbettungsmodell ähnlich sind (d.h. für die es ähnliche Einbettung liefert) auch aus Sicht des generativen Sprachmodells ähnlich sind. Es kann aber auch ein anderes Einbettungsmodell verwendet werden, z.B. ein solches, d.h. für dieselbe Domäne wie das generative Sprachmodell trainiert ist (bzw. für die Domäne, aus der die Anfragen kommen), z.B. Einbettung von Programmcode. Das Einbettungsmodell ist gemäß einer Ausführungsform zumindest ein Einbettungsmodell, das Einbettungen liefert, die von einer Komponente eines generativen Sprachmodell verarbeitet werden.

Das Einbettungsmodell ist nicht auf ein konkretes Einbettungsmodell beschränkt, vorzugweise wird das Modell aber passend zu dem Sprachmodell gewählt. Wenn eine Anwendung z.B. ein GPT-Modell von OpenAI nutzt, ist dementsprechend beispielsweise ein Einbettungsmodell wie text-embedding-3-large zu wählen. Offene Modelle wie https://huggingface.co/ibm-granite/granite-embedding-30m-english können für Sprachmodelle der Granite Familie genutzt werden. Weitere Beispiele sind gemini-embedding-exp-03-07 für Googles Gemini Modelle und gte-Qwen2-7B-instruct für Alibabas Qwen Modelle. Vorzugweise wird ein Sprachmodell und Einbettungsmodell genutzt, das für die Zieldomäne und deren Augmentationen speziell ausgelegt sind. Weiterhin kann als Vergleich neben einem Einbettungsmodell auch ein direktes Vergleichs-Modell genutzt werden.

Ausführungsbeispiel 6 ist ein Verfahren nach einem der Ausführungsbeispiele 1 bis 5, wobei das Testen ein Testen von Robustheit des generativen Sprachmodells gegenüber der mindestens einen Augmentierung ist.

Auf diese Weise wird das generative Sprachmodell auf Robustheit gegenüber plausiblen Augmentierungen getestet bzw. bei nachfolgendem Training robust gegenüber solchen Augmentierungen gemacht.

Ausführungsbeispiel 7 ist ein Verfahren nach Ausführungsbeispiel 6, aufweisend Ablehnen einer bei einem Datenverarbeitungssystem, das das generative Sprachmodell verwendet, eingegangenen Anfrage durch das Datenverarbeitungssystem, in Reaktion darauf, dass das Testen der Robustheit des generativen Sprachmodells ergibt, dass das Datenverarbeitungssystem auf die eingegangene Anfrage keine robuste Antwort liefern kann.

Damit wird die Zuverlässigkeit der Beantwortung von Anfragen an das Datenverarbeitungssystem erhöht.

Ausführungsbeispiel 8 ist ein Verfahren nach Ausführungsbeispiel 6 oder 7, wobei das Testen auf Robustheit ein Testen ist, ob Ausgaben des generativen Sprachmodells in Reaktion auf eine Eingabe einer mit der mindestens einen Augmentierung erzeugten augmentierten Version der Anfrage ein vorgegebenes Gütekriterium erfüllt.

Es wird hierzu beispielsweise pro augmentierter Version die Information erzeugt, ob das Sprachmodell eine Ausgabe erzeugen soll, die das Gütekriterium erfüllt. Hierbei kann das Gütekriterium von der ursprünglichen Anfrage abhängen. Im Falle von Programmcode kann das Gütekriterium beispielweise sein, dass erzeugter Programmcode fehlerfrei oder funktionsfähig (z.B. kompilierbar) ist.

Ausführungsbeispiel 9 ist ein Verfahren nach Ausführungsbeispiel 8, aufweisend Ableiten der mindestens einen Augmentierung und/oder einer oder mehrerer Schwellen für das Anfragen-Ähnlichkeitsmaß aus einer oder mehreren Programmcode-Basen für eine Zielaufgabe des Programmcodes.

Damit können plausible und relevante Augmentierungen gefunden werden.

Ausführungsbeispiel 10 ist ein Verfahren nach einem der Ausführungsbeispiele 1 bis 9, wobei die mindestens eine Anfrage Programmcode und die Instruktion an das generative Sprachmodell enthält, den Anfrage Programmcode zu überarbeiten.

Durch das generative Sprachmodell, das auf Robustheit gegenüber plausible Augmentierungen (also z.B. gegenüber typische Programmierfehler) getestet wurde, kann Programmcode mit weniger Fehlern erzeugt werden.

Ausführungsbeispiel 11 ist ein Verfahren nach Ausführungsbeispiel 10, wobei der Programmcode Programmcode für ein Steuerungsprogramm für eine Robotervorrichtung ist.

Ausführungsbeispiel 12 ist ein Verfahren nach einem der Ausführungsbeispiele 1 bis 11, aufweisend, abhängig von einem Ergebnis des Testens, Erzeugen von Programmcode mittels des getesteten generativen Sprachmodells für eine Robotervorrichtung und Steuern der Robotervorrichtung mittels des erzeugten Programmcodes.

Liefert das Testen z.B., dass das generative Sprachmodell (ggf. nach Nachtrainieren) robust gegenüber den Augmentierungen ist, wird es z.B. zum Überarbeiten von Steuerungscode eingesetzt.

Ausführungsbeispiel 13 ist ein Datenverarbeitungssystem zum Testen eines generativen Sprachmodells, eingerichtet zum Durchführen eines Verfahrens nach einem der Ausführungsbeispiele 1 bis 12.

Ausführungsbeispiel 14 ist ein Computerprogramm mit Befehlen, die, wenn sie durch einen Prozessor ausgeführt werden, bewirken, dass der Prozessor ein Verfahren nach einem der Ausführungsbeispiele 1 bis 12 durchführt.

Ausführungsbeispiel 15 ist ein computerlesbares Medium, das Befehle speichert, die, wenn sie durch einen Prozessor ausgeführt werden, bewirken, dass der Prozessor ein Verfahren nach einem der Ausführungsbeispiel 1 bis 12 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
- Figur 1: zeigt einen Computer für die Entwicklung und/oder das Testen von Softwareanwendungen.
- Figur 2: veranschaulicht eine Plausibilitätsprüfung einer Augmentierung.
- Figur 3: zeigt ein Diagramm, dass die Kategorisierung von Augmentierungen in plausible und nicht plausible Augmentierungen veranschaulicht.
- Figur 4: zeigt ein Ablaufdiagramm, das ein Verfahren zum Testen eines generativen Sprachmodells gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

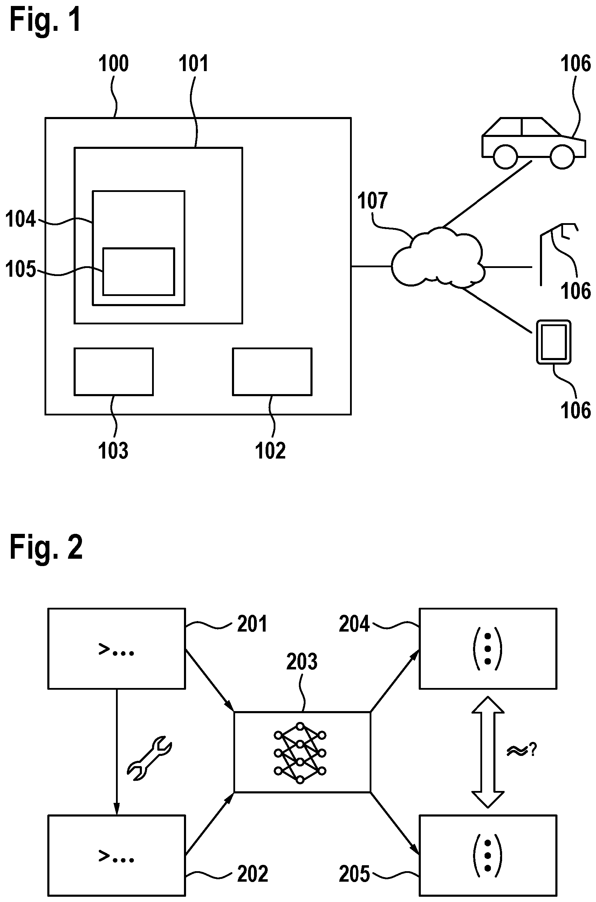

Figur 1 zeigt einen Computer 100 für die Entwicklung und/oder das Testen von Softwareanwendungen.

Der Computer 100 weist eine CPU (Central Processing Unit) 101 und einen Arbeitsspeicher (RAM) 102 auf. Der Arbeitsspeicher 102 wird zum Laden von Programmcode verwendet, z.B. von einer Festplatte 103, und die CPU 101 führt den Programmcode aus.

Im vorliegenden Beispiel wird davon ausgegangen, dass ein Benutzer beabsichtigt, mit dem Computer 100 eine Softwareanwendung zu entwickeln und/oder zu testen.

Dazu führt der Benutzer eine Softwareentwicklungsumgebung 104 auf der CPU 101 aus.

Die Softwareentwicklungsumgebung 104 ermöglicht es dem Benutzer, eine Anwendung für verschiedene Geräte 106, also ein Ziel-Hardware, wie eingebettete Systeme zum Steuern von Robotervorrichtungen, inklusive Roboterarme und autonome Fahrzeuge, oder auch für mobile (Kommunikations-)Geräte, zu entwickeln und zu testen. Dazu kann die CPU 101 als Teil der Softwareentwicklungsumgebung 104 einen Emulator ausführen, um das Verhalten des jeweiligen Geräts 106 zu simulieren, für das eine Anwendung entwickelt wird oder wurde. Wird sie nur zum Testen einer Software aus anderer Quelle eingesetzt, kann die Softwareentwicklungsumgebung 104 auch als Softwaretestumgebung angesehen werden bzw. ausgestaltet sein.

Der Benutzer kann die fertige Anwendung über ein Kommunikationsnetzwerk 107 an entsprechende Geräte 106 verteilen. Statt über ein Kommunikationsnetzwerk 107 kann dies auch auf andere Weise erfolgen, beispielsweise mittels eines USB-Sticks.

Bevor dies geschieht, sollte der Benutzer jedoch die Anwendung testen, um zu vermeiden, dass eine nicht ordnungsgemäß funktionierende Anwendung an die Geräte 106 verteilt wird.

In einem Szenario wie in Figur 1 dargestellt kann auf verschiedene Weise ein generatives Sprachmodell 105 beteiligt sein: So kann die Anwendung selbst ein generatives Sprachmodell sein, dass nach seiner Entwicklung (insbesondere seinem Training) für verschiedene Zwecke (insbesondere technische Zwecke) verwendet werden kann, z.B. für die Vervollständigung für Knowledge-Graphen für die Steuerung von Robotern, die Umsetzung von Sprachbefehlen in Steuersignale (d.h. in ein von einem Roboter verständliches Format) in Echtzeit, die Auswertung von Fehlerprotokollen (Diagnose) eines technischen Systems oder die Erzeugung von Verkehrssituationen zum Trainieren oder Testen einer Steuerungsstrategie für ein autonomes Fahrzeug.

Andererseits kann das generative Sprachmodell 105 auch selbst Teil der Softwareentwicklungsumgebung 104 sein in dem Sinne, dass es zur Codegenerierung verwendet wird. Beispielsweise kann ihm ein Prompt zugeführt werden, der den Zweck eines Programms beschreibt und die Aufgabe, ein solches Programm in einer bestimmten Programmiersprache und/oder ein bestimmtes Zielgerät 106 zu erzeugen. Es kann auch mittels entsprechender Prompts Aufgaben auf bestehendem Programmcode erledigen. Zum Beispiel kann es Programmcode verbessern (z.B. Fehler beheben) oder es kann Programmcode von einer Programmiersprache in eine andere Programmiersprache übersetzen.

In jedem Fall, also unabhängig davon, ob das generative Sprachmodell 105 selbst der entwickelten Anwendung entspricht oder ob es zur Entwicklung einer Anwendung eingesetzt wird (also diese zumindest teilweise selbst erzeugt), sollte das generative Sprachmodell 105 getestet werden, insbesondere in Hinblick auf den Zweck, für den es eingesetzt werden soll.

Ein generatives Sprachmodell 105 (z.B. ein Large-Language-Modell) kann beispielsweise Ergebnisse liefern, die nicht korrekt sind oder nicht gewünschten Qualitätskriterien entsprechen (solche Ergebnisse werden auch Halluzination genannt). Eine Selbst-Bewertung eines LLMs bzgl. seiner Konfidenz ist typischerweise nicht vertrauenswürdig.

Gemäß verschiedenen Ausführungsformen wird ein Herangehensweise bereitgestellt, die das effektive Testen eines generativen Sprachmodells 105 in Hinblick auf den Zweck, für den es eingesetzt wird, ermöglicht. Im Folgenden wird als Beispiel die Verarbeitung von Programmcode beschrieben, d.h. das Programm soll bestehenden Programmcode verarbeiten (z.B. Fehler erkennen und korrigieren), z.B. für die Entwicklung einer Anwendung wie mit Bezug auf Figur 1 beschrieben.

Die Prompts (d.h. die Anfragen an das generative Sprachmodell 105) enthalten also selbst schon Programmcode, den das generative Sprachmodell 105 verarbeiten soll. Außerdem wird in den folgenden Beispielen zur Einfachheit davon ausgegangen, dass das generative Sprachmodell ein LLM ist.

Das Ziel des Testens des generativen Sprachmodells 105 kann insbesondere darin gesehen werden, zu bewerten, ob das generative Sprachmodell 105 korrekte Antworten, also im vorliegenden Beispiel Programmcode, der ein bestimmtes Gütekriterium erfüllt, also z.B. eine vorgesehenen Zweck fehlerfrei erfüllt, liefern kann.

Testdaten können aus vorliegenden Anfragen (Prompts) durch Augmentierungen erzeugt werden. Unter einer Augmentierung wird eine Modifikation einer Anfrage zur Vervielfältigung von vorliegenden Anfragen unter relevanten Modifikationen verändert wurden, z.B. Rotation oder Cropping bei Bildern und Variablenumbenennung oder Formatierung bei Code. Eine spezifische Technik, wie eine bestimmte Variablenumbenennung, wird auch als Perturbation bezeichnet.

Gemäß verschiedenen Ausführungsformen werden zum Testen des LLMs 105 Augmentierungen unter Berücksichtigungen von Domänenwissen genutzt. Konkret werden domänen-spezifischer Augmentierung von vorliegenden LLM-Anfragen (eine sogenannte Testzeit-Augmentierung) verwendet, d.h. Augmentierungen, die für den vorgesehenen Einsatz des LLMs 105 typisch sind. Im vorliegenden Beispiel der Programmcodeverbesserung könnten dies z.B. Tippfehler sein, wie sie Programmierer typischerweise machen. Eine vorliegende Anfrage (d.h. insbesondere ein vorliegender Prorammcode) wird als beispielsweise mit einem typischen Tippfehler versehen, um sie zum Testen dem LLM 105 zuzuführen. Welche Augmentierungen in diesem Sinne typisch sind, kann z.B. aus einer Code-Basis ermittelt werden, die einem Softwareentwicklungsunternehmen vorliegen, z.B. in den letzten Jahren von Programmierern des Software-Entwicklungsunternehmens erstellter Programmcode (z.B. darin enthaltenen Variationen, z.B., in Bezug auf Bezeichner, Implementierungsstile oder Optimierungen).

Das LLM 105 kann dann dahingehend getestet werden, ob es Anfragen, die mit solchen Augmentierungen verändert wurde, erfolgreich verarbeitet, d.h. es wird ausgewertet, ob das LLM 105 robust gegenüber solchen Augmentierungen ist. Gemäß verschiedenen Ausführungsformen werden also Augmentierungen ausgewählt, mit denen Testdaten zum Testen des LLMs 105 erzeugt werden, wobei getestet wird, ob das LLM 105 die erzeugten Testdaten so verarbeitet, dass seine Ausgabe ein Gütekriterium erfüllt (beispielsweise aus einem gemäß einer ausgewählten Augmentierung augmentierten Programmcode funktionsfähigen Programmcode erzeugt)

Dabei wird, ob eine Augmentierung verwendet wird, um Testdaten aus einer vorliegenden Anfrage zu erzeugen, anhand einer Einbettung (Embedding) der mit der Augmentierung veränderten Anfrage entschieden (d.h. eine Augmentierung für eine vorliegenden Anfrage wird anhand einer Einbettung der mit der augmentierten Anfrage plausibilisiert). Unter Einbettung ist hier eine Einbettung (Embedding), in anderen Worten eine Codierung, verstanden, wie sie ein generatives Sprachmodell von einer Anfrage erzeugt, um die Anfrage weiterzuverarbeiten.

Einbettungen sind numerische Vektoren, welche genutzt werden, um Informationen darzustellen. Generative Sprachmodelle (insbesondere LLMs) nutzen solche Einbettungen intern, um Folgen von Tokens darstellen. Vergleiche zwischen den Abständen dieser Einbettungen ermöglichen es festzustellen, ob ein generatives Sprachmodell zwei Folgen von Tokens als ähnlich oder eher nicht ähnlich interpretiert.

Ein generatives Sprachmodell generiert seine Antwort auf eine Anfrage typischerweise Token für Token, in dem es basierend auf den bisherigen Tokens und einer selbstermittelten Konfidenz, die stark von der Trainingsgrundlage abhängt, das nächste Token anfügt (genannt Token Prediction). Es können Metriken bzgl. Konfidenzen von Token Predictions zurückgegeben werden, diese sind aber typischerweise wenig aussagekräftig. Das heißt, nur weil in einer Ausgabe auf jedes Token nur ein Token mit hoher Konfidenz folgt (und alle anderen Tokens jeweils eine geringe Konfidenz haben), braucht die Ausgabe nicht besonders richtig sein. Umgekehrt gilt auch, dass, nur weil in einer Ausgabe auf jedes Token mehrere Tokens mit ähnlicher niedriger Konfidenz folgen, die Ausgabe nicht besonders falsch zu sein braucht.

Um zu entscheiden, ob eine mit einer Augmentierung augmentierte Anfrage (d.h. eine augmentierte Version der Anfrage) verwendet wird, wird beispielsweise wie in Figur 2 veranschaulicht vorgegangen.

Figur 2 veranschaulicht eine Plausibilitätsprüfung einer Augmentierung.

Zu einer (ursprünglichen) Anfrage 201 wird durch Augmentierung eine augmentierte Version 202 der Anfrage ermittelt. Mittels eines Einbettungsmodells 203 wird dann jeweils eine jeweilige Einbettung 204, 205 ermittelt (dies kann auch nur für einen wesentlichen Teil der Anfrage erfolgen, z.B. den Programmcode, der verarbeitet werden soll). Das Einbettungsmodell 203 kann das Einbettungsmodell des zu testenden LLMs 105 sein aber auch das eines anderen generativen Sprachmodells, das ähnliche Eingaben verarbeitet (also z.B. ebenfalls Programmcode verarbeiten kann). Zwischen diesen Einbettungen 204, 205 wird dann im jeweiligen Einbettungsraum (der typischerweise ein Raum hochdimensionaler Vektoren ist) ein (Einbettungs-)Ähnlichkeitsmaß, z.B. aus dem Wert einer Abstandsmetrik (z.B. als dessen Kehrwert) oder z.B. Kosinus-Ähnlichkeit (engl. cosine similarity). Dieses Ähnlichkeitsmaß der Einbettungen kann dann auch als Ähnlichkeitsmaß den beiden Anfragen 201, 202 verwendet werden.

Es kann auch ein generelles Modell wie ein Cross-Encoder werdet werden, der aus zwei Texten (also im vorliegenden Anfragen oder zumindest Teilen davon, z.B. Programmcodes) intern Einbettungen berechnet und direkt eine 0-1-Bewertung ausgibt, die anzeigt, wie ähnlich bzw. unterschiedlich die Texte sind, d.h. ein Ähnlichkeitsmaß liefert.

Ist die augmentierte Version einer Anfrage der Anfrage unähnlich (hoher Abstand im Einbettungsraum), ist die Augmentierung für diese Anfrage nicht interessant und wird nicht zum Erzeugen von Testdaten (aus dieser Anfrage) verwendet. Dies folgt der Logik, dass, wenn die augmentierte Version einer Anfrage der Anfrage unähnlich ist, es nicht plausibel ist, dass diese auftritt. Beispielsweise ist es nicht plausibel, dass Programmcode, der einer solchen Augmentierung von korrektem Code entspricht (z.B. das eine völlig falsche Funktion verwendet wurde), auftritt und deshalb braucht das LLM 105 gegenüber diese Augmentierung auch nicht notwendigerweise robust zu sein.

Ist die augmentierte Version einer Anfrage der Anfrage hingegen ähnlich (geringer Abstand im Einbettungsraum), ist die Augmentierung für diese Anfrage interessant und wird zum Erzeugen von Testdaten (aus dieser Anfrage) verwendet. Ist die augmentierte Version einer Anfrage der Anfrage ähnlich, ist es plausibel, dass diese auftritt und das LLM 105 sollte gegenüber dieser Augmentierung robust sein, d.h. aus Sicht des Einbettungsmodells ist die augmentierte Version der Anfrage der ursprünglichen Anfrage ähnlich genug, um eine erfolgreiche Beantwortung der Anfrage zu bedingen.

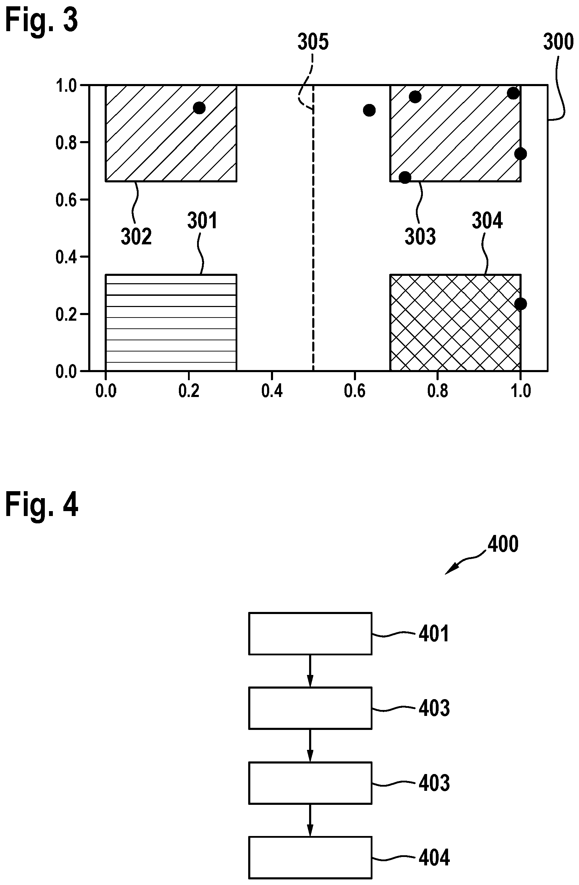

Figur 3 zeigt ein Diagramm 300, dass die Kategorisierung von Augmentierungen (für eine gegebene Anfrage) in plausible und nicht plausible Augmentierungen veranschaulicht.

Augmentierungen sind durch Punkte dargestellt. Die Ähnlichkeit der mit einer jeweiligen Augmentierung augmentierten Anfrage zu der Anfrage steigt von links nach rechts (Kosinusähnlichkeit in diesem Fall) und wie gut das Gütekriterium durch die Ausgabe des LLMs 105 für die augmentierte Anfrage erfüllt ist (z.B. Kompilierfähigkeit von ausgegebenem Programmcode) steigt von oben nach unten.

Es sind vier Bereiche gekennzeichnet:
Bereich 301 links unten: Geringe Ähnlichkeit, geringe Güte der Ausgabe. Eine Augmentierung in diesem Bereich wird nicht ausgewählt, weil die Ähnlichkeit gering ist. Das Modell wäre potentiell an dieser Stelle nicht robust, aber die konkrete Augmentation ist außerhalb des zu testenden Bereichs.

Bereich 302 links oben: Geringe Ähnlichkeit, hohe Güte der Ausgabe. Eine Augmentierung in diesem Bereich wird nicht ausgewählt, weil die Ähnlichkeit gering ist. Das Modell wäre potentiell an dieser Stelle sogar robust, obwohl die konkrete Augmentation außerhalb des zu testenden Bereichs ist.

Bereich 303 rechts oben: Hohe Ähnlichkeit, hohe Güte der Ausgabe. Eine Augmentierung in diesem Bereich wird ausgewählt. Liegt sie in diesem Bereich, deutet dies auf kein Problem des zu testenden LLMs 105 hin, da die Güte der Ausgabe hoch ist.

Bereich 304 rechts unten: Hohe Ähnlichkeit, geringe Güte der Ausgabe. Eine Augmentierung in diesem Bereich wird ausgewählt. Liegt sie in diesem Bereich, deutet dies auf ein Problem des zu testenden LLMs 105 hin, da die Güte der Ausgabe niedrig ist, die Augmentierung aber plausibel.

Die Schwelle 305 für die Ähnlichkeit, ab dem eine Augmentierung verwendet wird, kann für die jeweilige Anmeldung experimentell ermittelt werden.

Es sollte beachtet werden, dass generative Sprachmodelle typischerweise eine Zufallskomponente haben (die Ausgabe hängt vom Wert eines Seeds ab). Die gezeigten Positionen der Augmentierungen können deshalb durch Mittelungen der jeweiligen Ausgaben bzw. Einbettungs-Ähnlichkeitsmaße über mehrere Verarbeitungen (Durchläufe) durch das LLM 105 erzeugt werden. Beispielsweise kann eine augmentierte Anfrage neunmal zu einer Ausgabe führen, die das Gütekriterium erfüllt, und einmal nicht. Ebenso kann der Abstand der Einbettung der augmentierten Version der Anfrage von der der ursprünglichen Anfrage von Durchlauf zu Durchlauf variieren. Das Ähnlichkeitsmaß zwischen mittels einer Augmentierung erzeugten augmentierten Versionen einer Anfrage und der ursprünglichen Version der Anfrage kann also eine Mittelung über Einbettungs-Ähnlichkeitsmaße sein (für verschiedene Einbettungen, die durch mehrmalige Anwendung des Einbettungsmodells erzeugt wurden). Das Ähnlichkeitsmaß zwischen mittels einer Augmentierung erzeugten augmentierten Versionen einer Anfrage und der ursprünglichen Version der Anfrage kann auch durch eine Mittelung über mehrere augmentierte Version erzeugt werden: Mittels (derselben) Augmentierung werden mehrere augmentierte Versionen erzeugt (da die Augmentierung auch eine Zufallskomponente haben kann, z.B. welche Variablen ausgetauscht werden), dann wird pro augmentierter Version ein Ähnlichkeitsmaß zu der ursprünglichen Anfrage ermittelt (aus der Ähnlichkeit der jeweiligen Einbettungen, wobei wie oben erläutert dabei über mehrere Einbettungen der augmentierten Version gemittelt werden kann) und über diese Ähnlichkeitsmaße wird dann gemittelt, um das Anfragen-Ähnlichkeitsmaß für die Augmentierung zu erhalten. Das Mitteln für die Ermittlung des Anfragen-Ähnlichkeitsmaßes für die Augmentierung kann somit insbesondere zweistufig sein: Erst wird für jede erzeugte augmentierte Version über die Einbettungs-Ähnlichkeitsmaße der Einbettungen gemittelt und dann über die augmentierten Versionen.

Wie oben beschrieben werden gemäß verschiedenen Ausführungsformen Augmentierungen ausgewählt (ggf. individuell für jede vorliegende Anfrage) um aus vorliegenden Anfragen Testdaten für ein LLM 105 (allgemein ein generatives Sprachmodell) zu erzeugen. Diese können dann beispielsweise wie folgt im Zusammenhang des Testens des LLMs 105 verwendet werden (z.B. von der Softwareentwicklungsumgebung 104):
1) Robuste Evaluation von LLMs: Fordern bzw. Sicherstellen eines gewissen Konsistenzmaßes bzw. Gütekriteriums bzgl. der Ausgaben, die das LLM durch die ausgewählten Augmentierungen augmentierte Versionen einer vorliegenden LLM-Anfrage liefert
2) Datenauswahl zum Nachbessern (insbesondere Training) eines LLMs (z.B. falls es ein Testkriterium noch nicht erfüllt): Erkennen von interessanten Datenpunkten (Testdaten), da Konsistenz von Ausgaben für augmentierte Anfragen (einer Menge von Anfragen) schwieriger zu erreichen ist als bei beliebigen Datenpunkten
3) Fine-Tuning des LLMs, z.B. mittels Reinforcement Learning: Automatische Bewertung und Verbesserung des LLMs anhand aller gesehenen Datenpunkte während des Einsatzes eines LLMs. Beispielsweise werden mittels ausgewählten Augmentierungen erzeugte Anfragen erzeugt und es wird ein Feedback zu von dem LLM auf diese erzeugten Anfragen gelieferten Ergebnisse gegeben (durch Vergleich mit einem gewünschten gelieferten Ergebnis) und das LLM angepasst, dass es mit höherer Wahrscheinlichkeit die Ergebnisse mit gutem Feedback liefert.

Im Folgenden wird ein Ausführungsbeispiel beschrieben. Die Domäne ist hier Programmcode, aber die beschriebene Herangehensweise lässt sich auf beliebige Domänen mit entsprechenden domänen-spezifischen Perturbationen anwenden.

Wenn ein einzelnes LLM betrachtet wird, wird beispielsweise untersucht, ob das LLM robust ist. Wenn parallel viele LLMs (d.h. ein Ensemble von ähnlich guten Modellen) betrachtet werden, kann hingegen ein Fokus auf die Daten gelegt werden (data robustness): Wenn ein einzelnes Modell genommen wird, werden die Fehler des konkreten Modells betrachtet. Wenn viele Modelle betrachtet werden, dann ist der Fehler konsistent über viele Modelle und man kann annehmen, dass er aus den Daten entsteht, weil kein Modell damit umgehen kann. Dies liefert daraus folgend eine Information über die Robustheit der Daten (z.B. von Anfragen) statt über die Robustheit eines Modells.

Es sollte beachtet werden, dass zu einem generativen Sprachmodell wie einem LLM stets ein Tokenizer gehört. Der Tokenizer kann sensitiv sein auf konkrete Perturbationen, weil z.B. basierend auf Groß-/Kleinschreibung vor der eigentlichen Tokenization der Text aufgeteilt wird.

Im Folgenden Beispiel ist die vorliegende Anfrage eine Verarbeitung einer einfachen Programmfunktion für ein eingebettetes System, welches bestimmte Bits verändert. Diese Funktion ist unten als Snippet 1 bezeichnet.

### Snippet 1:

```
 #include <stdint.h>
 typedef uint8_t uint8;
 typedef uint32_t uint32;
 uint32
 getHighestBit(
  const uint8 *op,
  const uint32 opLength)
  {
  uint32 bitNum;
  uint8 mask;
  uint32 i;
  bitNum = 0U;
  /* Finde das erste Byte, das nicht gleich Null ist, erhöhe den Bitindex um 8 für
  jedes gefundene Byte */
  for (i = 0U; ((i < (opLength - 1U)) && (op[i] == 0U)); i++)
  {
     bitNum += 8U;
  }
  /* In dem ersten Byte ungleich null, finde das erste Bit, das gleich Eins ist */
  for (mask = (uint8) 0x80U; (((op[i] & mask) == 0U) && (mask > 0U)); mask >>=
  1U)
  {
     bitNum++;
  }
  return bitNum;
  }
```

Es folgen Perturbationen dieser Funktion. Die erste Perturbation ist als Snippet 2 bezeichnet: Hierbei ist lediglich die Formatierung des Codes zum Mozilla-Standard geändert. Man beachte, dass auf der einen Seite der Mozilla-Standard weniger Zeichen pro Zeile erlaubt, auf der anderen Seite erlaubt es Funktionsargumente auf der gleichen Zeile.

### Snippet 2:

```
 #include <stdint.h>
 typedef uint8_t uint8;
 typedef uint32_t uint32;
 uint32
 getHighestBit(const uint8* op, const uint32 opLength)
 {
 uint32 bitNum;
 uint8 mask;
 uint32 i;
 bitNum = 0U;
 /* Finde das erste Byte, das nicht gleich Null ist, erhöhe den Bitindex um 8 für
 jedes gefundene Byte */
 for (i = 0U; ((i < (opLength - 1U)) && (op[i] == 0U)); i++) {
  bitNum += 8U;
 }
 /* In dem ersten Byte ungleich null, finde das erste Bit, das gleich Eins ist */
 for (mask = (uint8)0x80U; (((op[i] & mask) == 0U) && (mask > 0U));
    mask >>= 1U) {
  bitNum++;
 }
 return bitNum;
 }
```

Die zweite Perturbation ist als Snippet 3 bezeichnet: Ausgehend von Snippet 1 wurden alle Variablen-Identifier durch möglichst kurze Identifier ersetzt. Zum Beispiel heißt die lokale Variable bitNum jetzt a.

### Snippet 3:

```
 #include <stdint.h>
 typedef uint8_t uint8;
 typedef uint32_t uint32;
 uint32
 f(
  const uint8 *d,
  const uint32 e)
  {
  uint32 a;
  uint8 b;
  uint32 c;
  a = 0U;
  /* Finde das erste Byte, das nicht gleich Null ist, erhöhe den Bitindex um 8 für
  jedes gefundene Byte */
  for (c = 0U; ((c < (e - 1U)) && (d[c] == 0U)); c++)
  {
     a += 8U;
  }
  /* In dem ersten Byte, das nicht gleich Null ist, finde das erste Bit, das gleich
  Eins ist */
  for (b = (uint8) 0x80U; (((d[c] & b) == 0U) && (b > 0U)); b >>= 1U)
  {
     a++;
  }
  return a;
  }
```

Snippet 4 ist eine andere Funktion aus dem gleichen Programmstand.

### Snippet 4:

```
 #define TRUE ((boolean) 1U)
 #define RESPONSELENGTH_UNSUPPORTEDSERVICE 5u
 #define STATUS_NOT_SUPPORTED 1u
 #define SERVICEIDLENGTH 4u
 #include <stdint.h>
 typedef uint8_t uint8;
 typedef uint8 boolean;
 static boolean ServiceDispatcher_UnsupportedServiceld(uint8* payload_p, uint8*
 payloadLength_p)
 {
  /* Um eine Antwort zu erzeugen, wird derselbe Rx-Buffer verwendet. Die ers-
  ten 4 Bytes werden schon von der Dienst-ID belegt. */
  uint8 datalndex = SERVICEIDLENGTH;
  uint8 status = STATUS_NOT_SUPPORTED;
  *payloadLength_p = RESPONSELENGTH_UNSUPPORTEDSERVICE;
  /* create response data */
  payload_p[datalndex] = status;
  return TRUE;
  }
```

Snippet 5 ist eine weitere Perturbation, die lediglich einen ausführlichen Kommentar hinzufügt.

### Snippet 5:

```
 #include <stdint.h>
 typedef uint8_t uint8;
 typedef uint32_t uint32;
 uint32
 getHighestBit(
  const uint8 *op,
  const uint32 opLength)
  /*Lorem ipsum dolor sit amet, consectetur adipiscing elit, sed do eiusmod tem-
  por incididunt ut labore et dolore magna aliqua.
  
```

Ut enim ad minim veniam, quis nostrud exercitation ullamco laboris nisi ut aliquip ex ea commodo consequat.

Duis aute irure dolor in reprehenderit in voluptate velit esse cillum dolore eu fugiat nulla pariatur.

Excepteur sint occaecat cupidatat non proident, sunt in culpa qui officia deserunt mollit anim id est laborum.*/

```
 {
  uint32 bitNum;
  uint8 mask;
  uint32 i;
  bitNum = 0U;
  /* Finde das erste Byte, das nicht gleich Null ist, erhöhe den Bitindex um 8 für
  jedes gefundene Byte */
  for (i = 0U; ((i < (opLength - 1U)) && (op[i] == 0U)); i++)
  {
     bitNum += 8U;
  /* In dem ersten Byte, das nicht gleich Null ist, finde das erste Bit, das gleich
  Eins ist */
  for (mask = (uint8) 0x80U; (((op[i] & mask) == 0U) && (mask > 0U)); mask >>=
  1 U)
  {
     bitNum++;
  return bitNum;
  
```

Es ist zu erwarten, dass die Einbettungen von Snippet 1, 2, 3 und 5 sehr ähnlich sind, während die Einbettung von Snippet 4 deutlich weniger ähnlich ist.

Mit einem LLM (hier z.B. das LLM Snowflake/snowflake-arctic-embed-m-v1.5) ergeben sich folgende Werte für die paarweise Kosinus-Ähnlichkeit zwischen den einzelnen Snippets, welche sich genau mit diesen Erwartungen decken:

| | Snippet 1 | Snippet 2 | Snippet 3 | Snippet 4 | Snippet 5 |
|---|---|---|---|---|---|
| Snippet 1 | 1. | 0.99924441 | 0.97190644 | 0.66233298 | 0.96073365 |
| Snippet 2 | 0.99924441 | 1. | 0.96998599 | 0.66130938 | 0.95968659 |
| Snippet 3 | 0.97190644 | 0.96998599 | 1. | 0.65927075 | 0.94691491 |
| Snippet 4 | 0.66233298 | 0.66130938 | 0.65927075 | 1. | 0.67747695 |
| Snippet 5 | 0.96073365 | 0.95968659 | 0.94691491 | 0.67747695 | 1. |

Bei der Anwendung für Programmcode braucht der Programmcode dem LLM 105 nicht notwendigerweise in Textform übergeben brauchen, sondern kann auch z.B. als Abstract Syntax Tree (AST) encodiert an das LLM 105 zu übergeben werden. In diesem Fall wird noch expliziter ausgenutzt und dargestellt, dass der Programmcode keine Mehrdeutigkeiten enthält (im Gegensatz zu natürlicher Sprache). Mit der AST-Repräsentation wird noch klarer, dass Programmcode die Eingabe ist (und nicht natürliche Sprache) und man kann bestimmte Knoten des AST für z.B. Variablennamen oder Kommentare normalisieren.

Weitere mögliche Perturbationen neben der Ersetzung von Variablennamen und dem unterschiedlichen Formatieren von Programmcode können zum Beispiel die Folgenden sein:
- das Einführen von Schreibfehlern mit einer gewissen Wahrscheinlichkeit
- das Übersetzen von natürlichsprachlichem Textanteil in eine andere Sprache
- zusätzlich kann anschließend der Textanteil aus dem vorherigen Punkt wieder in die Originalsprache zurückübersetzt werden
- das Entfernen oder Modifizieren jeglicher Kommentare im Programmcode
- die Nutzung unterschiedlicher Groß- und Kleinschreibung für Variablen im Code
- (logische) Umformulierungen (verhaltensneutral) innerhalb des Programmcodes

Weitere Augmentierungen sind möglich und die hier genannten Perturbationen sind nur als Beispiele zu verstehen. Der letzte Punkt der obigen Aufzählung geht durch logische Perturbationen über die vorigen rein syntaktischen Perturbationen hinaus.

Der von dem LLM 105 bearbeitete Programmcode kann beispielsweise eine Funktionalität auf einem Steuergerät (ECU) implementieren. Beispiele sind Steuergeräte für einen Motor, einen Airbag, einen Scheibenwischer, usw., welche mit der Umgebung über Sensoren und Aktoren interagieren. Ähnlich sind Anwendungen in der Robotik z.B. für Mähroboter oder Transportroboter in einer Fabrik möglich.

Zusammengefasst wird gemäß verschiedenen Ausführungsformen ein Verfahren bereitgestellt, wie in Figur 4 dargestellt.

Figur 4 zeigt ein Ablaufdiagramm 400, das ein Verfahren zum Testen eines generativen Sprachmodells gemäß einer Ausführungsform darstellt.

Für mindestens eine Anfrage an das generative Sprachmodell, wird/werden
- in 401 für mindestens eine Augmentierung mindestens eine augmentierte Version der Anfrage mittels der Augmentierung erzeugt. Dazu kann auch das gewünschte vom Sprachmodell gelieferte Ergebnis (d.h. Ausgabe) für die jeweilige augmentierte Version der Anfrage erzeugt werden. Dabei kann dies in vielen Fällen invariant sein (Ausgabe bleibt gleich), das braucht aber nicht so zu sein.
- in 402 die mindestens eine augmentierte Version der Anfrage und der Anfrage in einen Einbettungsraum mittels eines maschinellen Einbettungsmodells eingebettet (d.h. eine Einbettung erzeugt, typischerweise in Form eines Vektors)
- in 403 für die mindestens eine Augmentierung ein Anfragen-Ähnlichkeitsmaß zwischen der mindestens einen augmentierten Version der Anfrage und der Anfrage aus einem Maß für die Ähnlichkeit der eingebetteten mindestens einen augmentierten Version der Anfrage zu der eingebetteten Anfrage im Einbettungsraum ermittelt
- in 404 abhängig von dem Anfragen-Ähnlichkeitsmaß Testdaten für das generative Sprachmodell mittels der mindestens einen Augmentierung erzeugt und das generative Sprachmodell mittels der erzeugten Testdaten getestet.

Das Verfahren von Figur 4 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert.

Beispielsweise wird das generative Sprachmodell (nach Testen und ggf. Nachtrainieren) zum Erzeugen eines Steuerprogramms für eine Robotervorrichtung eingesetzt. Der Begriff "Robotervorrichtung" kann als sich auf irgendein technisches System (mit einem mechanischen Teil, dessen Bewegung gesteuert wird) beziehend verstanden werden, wie z. B. eine computergesteuerte Maschine, ein Fahrzeug, ein Haushaltsgerät, ein Elektrowerkzeug, eine Fertigungsmaschine, einen persönlichen Assistenten oder ein Zugangssteuersystem.

## Patentansprüche

1. Verfahren zum Testen eines generativen Sprachmodells (105), aufweisend:
für mindestens eine Anfrage an das generative Sprachmodell (105), Erzeugen (401), für mindestens eine Augmentierung, mindestens einer augmentierten Version der Anfrage mittels der Augmentierung;
Einbetten (402) der mindestens einen augmentierten Version der Anfrage und der Anfrage in einen Einbettungsraum mittels eines maschinellen Einbettungsmodells (203);
Ermitteln (403), für die mindestens eine Augmentierung, eines Anfragen-Ähnlichkeitsmaßes zwischen der mindestens einen augmentierten Version der Anfrage und der Anfrage aus einem Maß für die Ähnlichkeit der eingebetteten mindestens einen augmentierten Version der Anfrage zu der eingebetteten Anfrage im Einbettungsraum;
Erzeugen von Testdaten für das generative Sprachmodell (105) mittels der mindestens einen Augmentierung und Testen (404) des generativen Sprachmodells (105) mittels der erzeugten Testdaten abhängig von dem Anfragen-Ähnlichkeitsmaß.

2. Verfahren nach Anspruch 1, aufweisend Erzeugen mehrerer augmentierter Versionen der Anfrage mittels der mindestens einen Augmentierung, Erzeugen, für jede der mehreren augmentierten Versionen der Anfrage, mindestens einer Einbettung (205) der augmentierten Version der Anfrage in dem Einbettungsraum und Erzeugen einer Einbettung (204) der Anfrage, Ermitteln eines Einbettungs-Ähnlichkeitsmaßes zwischen den erzeugten Einbettungen (205) der augmentierten Versionen der Anfrage zu der Einbettung (204) der Anfrage, und Ermitteln des Anfragen-Ähnlichkeitsmaßes durch Aggregieren der Einbettungs-Ähnlichkeitsmaße über die augmentierten Versionen der Anfrage.

3. Verfahren nach Anspruch 1 oder 2, aufweisend Erzeugen von Testdaten für das generative Sprachmodell (105) mittels der mindestens einen Augmentierung und Testen des generativen Sprachmodells (105) mittels der erzeugten Testdaten in Reaktion darauf, dass das Anfragen-Ähnlichkeitsmaß eine vorgegebene Schwelle (305) überschreitet.

4. Verfahren nach einem der Ansprüche 1 bis 3, aufweisend Erzeugen, für jede mehrerer Augmentierungen, mindestens einer augmentierten Version der Anfrage mittels der Augmentierung;
Einbetten der mindestens einen augmentierten Version der Anfrage und der Anfrage in einen Einbettungsraum mittels des maschinellen Einbettungsmodells (203);
Ermitteln, für die Augmentierung, eines Anfragen-Ähnlichkeitsmaßes zwischen der mindestens einen augmentierten Version der Anfrage und der Anfrage aus einem Maß für die Ähnlichkeit der eingebetteten mindestens einen augmentierten Version der Anfrage zu der eingebetteten Anfrage im Einbettungsraum;
Auswählen, aus den mehreren Augmentierungen, einer oder mehrerer Augmentierungen, für die die höchsten Anfragen-Ähnlichkeitsmaßen ermittelt wurden, und Erzeugen von Testdaten für das generative Sprachmodell (105) mittels der mindestens einen ausgewählten Augmentierung und Testen des generativen Sprachmodells (105) mittels der erzeugten Testdaten.

5. Verfahren nach einem der Ansprüche 1 bis 4, ferner aufweisend Erzeugen von Testdaten für das generative Sprachmodell (105) mittels der mindestens einen Augmentierung und Nachtrainieren des generativen Sprachmodells (105) mittels der erzeugten Testdaten abhängig von dem Anfragen-Ähnlichkeitsmaß und abhängig von einem Ergebnis des Testens des generativen Sprachmodells (105) mit den Testdaten.

6. Verfahren nach einem der Ansprüche 1 bis 5, wobei das Testen ein Testen von Robustheit des generativen Sprachmodells (105) gegenüber der mindestens einen Augmentierung ist.

7. Verfahren nach Anspruch 6, aufweisend Ablehnen einer bei einem Datenverarbeitungssystem, das das generative Sprachmodell (105) verwendet, eingegangenen Anfrage durch das Datenverarbeitungssystem, in Reaktion darauf, dass das Testen der Robustheit des generativen Sprachmodells (105) ergibt, dass das Datenverarbeitungssystem auf die eingegangene Anfrage keine robuste Antwort liefern kann.

8. Verfahren nach Anspruch 6 oder 7, wobei das Testen auf Robustheit ein Testen ist, ob Ausgaben des generativen Sprachmodells (105) in Reaktion auf eine Eingabe einer mit der mindestens einen Augmentierung erzeugten augmentierten Version der Anfrage ein vorgegebenes Gütekriterium erfüllt.

9. Verfahren nach einem der Ansprüche 1 bis 8, wobei die mindestens eine Anfrage Programmcode und die Instruktion an das generative Sprachmodell (105) enthält, den Anfrage Programmcode zu überarbeiten.

10. Verfahren nach Anspruch 9, aufweisend Ableiten der mindestens einen Augmentierung und/oder einer oder mehrerer Schwellen für das Anfragen-Ähnlichkeitsmaß aus einer oder mehreren Programmcode-Basen für eine Zielaufgabe des Programmcodes.

11. Verfahren nach Anspruch 9 oder 10, wobei der Programmcode Programmcode für ein Steuerungsprogramm für eine Robotervorrichtung ist.

12. Verfahren nach einem der Ansprüche 1 bis 11, aufweisend, abhängig von einem Ergebnis des Testens, Erzeugen von Programmcode mittels des getesteten generativen Sprachmodells (105) für eine Robotervorrichtung und Steuern der Robotervorrichtung mittels des erzeugten Programmcodes.

13. Datenverarbeitungssystem (100) zum Testen eines generativen Sprachmodells (105), eingerichtet zum Durchführen eines Verfahrens nach einem der Ansprüche 1 bis 12.

14. Computerprogramm mit Befehlen, die, wenn sie durch einen Prozessor ausgeführt werden, bewirken, dass der Prozessor ein Verfahren nach einem der Ansprüche 1 bis 12 durchführt.

15. Computerlesbares Medium, das Befehle speichert, die, wenn sie durch einen Prozessor ausgeführt werden, bewirken, dass der Prozessor ein Verfahren nach einem der Ansprüche 1 bis 12 durchführt.
